# EUROPÄISCHE PATENTSCHRIFT

(11) **EP 3 318 382 B1**
(45) Veröffentlichungstag und Bekanntmachung des Hinweises auf die Patenterteilung: **24.07.2019**
(21) Anmeldenummer: 17200165.3
(22) Anmeldetag: 06.11.2017
(51) Int. Cl.: B29C 33/30, B29C 41/06, B29C 41/34, B29C 41/46, B29C 41/52

(54) **ROTATIONSVORRICHTUNG UND KUGELFÖRMIGE AUFNAHMEVORRICHTUNG ZUM AUFNEHMEN WENIGSTENS EINER ROTATIONSGUSSFORM**
ROTATION DEVICE AND SPHERICAL MOULD CARRIER FOR CARRYING AT LEAST ONE ROTATIONAL MOULD
DISPOSITIF DE ROTATION ET SUPPORT DE MOULE SPHÉRIQUE POUR PORTER AU MOINS UN MOULE ROTATIF

(30) Priorität: 07.11.2016 LU 93290
(43) Veröffentlichungstag der Anmeldung: 09.05.2018
(73) Patentinhaber: ROTO evolution GmbH, 08451 Crimmitschau (DE)
(72) Erfinder: Naumann, Frank, 04626 Vollmershain (DE)
(74) Vertreter: Grabovac, Dalibor

(56) Entgegenhaltungen:
- EP-A1- 2 918 386
- WO-A2-2014/000727
- US-A- 2 946 092
- US-A- 3 003 188
- US-A- 3 309 762
- US-A- 3 704 084
- US-B1- 6 555 037

## Beschreibung

Die Erfindung betrifft eine kugelförmige Aufnahmevorrichtung zum Aufnehmen wenigstens einer Rotationsgussform, die dazu ausgebildet und bestimmt ist, in einer Rotationsvorrichtung mittels eines auf der Außenseite der kugelförmigen Aufnahmevorrichtung abrollenden Antriebsrades zur Rotation angetrieben zu werden, wobei die Aufnahmevorrichtung wenigstens eine Führungsvorrichtung aufweist, die bewirkt, dass ein auf der Außenseite der kugelförmigen Aufnahmevorrichtung abrollendes Antriebsrad einem vorbestimmten Abrollweg auf der Außenseite der kugelförmigen Aufnahmevorrichtung folgt.

Die Erfindung betrifft außerdem eine Rotationsvorrichtung mit einer solchen kugelförmigen Aufnahmevorrichtung.

Um Rotationsguss-Formkörper aus Kunststoffen herstellen zu können, ist es erforderlich, eine mit Rohmaterial beschickte Rotationsgussform zu rotieren und dabei auf eine derart hohe Temperatur zu heizen, dass das zumeist pulverförmige oder granulatförmige, insbesondere mikrogranulatförmige, Rohmaterial während des Rotationsprozesses schmilzt und sich an der Innenwandung der Gussform anlagert. Die Rotationsbewegung darf hierbei nicht ausschließlich um eine einzige Rotationsachse erfolgen; vielmehr ist es erforderlich, die Gussform in mindestens zwei Dimensionen zu rotieren.

Aus WO 2014/000 727 A2 ist eine Rotationsvorrichtung für Rotationsguss-Formkörper bekannt, die eine kugelförmige Aufnahmevorrichtung für wenigstens eine Gussform, eine Haltevorrichtung für die kugelförmige Aufnahmevorrichtung und eine Antriebseinheit zum Bewirken der Rotationsbewegung aufweist. Die kugelförmige Aufnahmevorrichtung besteht aus zwei Teilen und kann in einer Trennebene geöffnet werden, um die Gussform zu beschicken oder um den fertigen Rotationsgussformkörper aus der Gussform entnehmen zu können. Die kugelförmige Aufnahmevorrichtung wird mittels eines motorangetriebenen, auf der Außenseite abrollenden Antriebsrades zur Rotation angetrieben. Das Antriebsrad ist samt dem zugeordneten Motor unter der kugelförmigen Aufnahmevorrichtung angeordnet. Um die Rotationsrichtung der kugelförmigen Aufnahmevorrichtung ändern zu können, ist das Antriebsrad samt dem Motor auf einem horizontalen Drehteller angeordnet, der mittels eines weiteren Motors um eine senkrechte Achse gedreht werden kann.

Aus US 6,555,037 B1 ist eine Mehrachsenrotationsvorrichtung bekannt, die ein Trägerteil mit Antriebsrädern und ein kugelförmiges Rahmenteil, das eine Gussform beinhaltet, aufweist. Das kugelförmige Rahmenteil hat Paare von kreisförmigen Kerben, in die die Antriebsräder eingreifen können.

EP 2 918 386 A1 offenbart ein Kugelrotationsverfahren zum Herstellen von Rotationsguss-Formkörpern, bei dem eine kugelförmige Aufnahmevorrichtung rotiert wird, in der sich zumindest eine mit Ausgangsmaterial beschickte Gussnegativform befindet. Das Kugelrotationsverfahren zeichnet sich dadurch aus, dass die kugelförmige Aufnahmevorrichtung zumindest teilweise elektrisch leitend ausgebildet ist und dass während des Rotationsvorganges elektrische Energie derart durch die kugelförmige Aufnahmevorrichtung geleitet wird, dass durch die kugelförmige Aufnahmevorrichtung ein elektrischer Strom fließt. Die kugelförmige Aufnahmevorrichtung wird mittels eines Antriebsmotors, der die Antriebsenergie über ein Antriebsrad auf die kugelförmige Aufnahmevorrichtung überträgt, zur Rotation angetrieben.

Die US 3,704,084 A und US 2,946,092 A offenbaren ebenfalls kugelförmige Aufnahmevorrichtungen und Rotationsvorrichtungen, wobei nach der US 3,704,084 A eine mehrachsige Drehung über Walzen mit unterschiedlichen Drehgeschwindigkeiten erzielt werden kann und nach der US 2,946,092 A die kugelförmige Aufnahmevorrichtung durch gegenüberliegende Drehteller rotiert wird. Die US 3,309,762 A und US 3,003,188 A betreffen zylindrische Gusswerkzeuge oder zylindrische Aufnahmevorrichtungen, auf denen Führungen für Räder angebracht sind.

Es ist eine Aufgabe der vorliegenden Erfindung, eine kugelförmige Aufnahmevorrichtung anzugeben, die auf einfache Weise ein besonders an das herzustellende Produkt angepasstes Rotieren und präzises Steuern eines Rotationsgussprozesses ermöglicht.

Die Aufgabe wird durch eine kugelförmige Aufnahmevorrichtung der eingangs genannten Art gelöst, die dadurch gekennzeichnet ist, dass der Abrollweg zusätzlich zu einer Krümmung, die durch die Kugelform der Aufnahmevorrichtung bedingt ist, eine weitere Krümmung aufweist und/oder dass der Abrollweg nicht ausschließlich entlang einem Großkreis oder einem Kleinkreis der Aufnahmevorrichtung verläuft.

Es ist eine weitere Aufgabe der vorliegenden Erfindung, eine Rotationsvorrichtung anzugeben, ein besonders an das herzustellende Produkt angepasstes Rotieren und präzises Steuern eines Rotationsgussprozesses erlaubt.

Die weitere Aufgabe wird durch eine Rotationsvorrichtung gelöst, die eine erfindungsgemäße, kugelförmige Aufnahmevorrichtung und ein mittels eines Antriebsmotors angetriebenes Antriebsrad, das auf der Außenseite der kugelförmigen Aufnahmevorrichtung abrollt und die kugelförmige Aufnahmevorrichtung zur Rotation antreibt, aufweist.

Die Erfindung hat den ganz besonderen Vorteil, dass ein Rotieren nicht lediglich um eine einzige, raumfeste Rotationsachse der kugelförmigen Aufnahmevorrichtung oder sequentiell um zueinander senkrechte Rotationsachsen der kugelförmigen Aufnahmevorrichtung möglich ist, sondern dass vielmehr auf einfache Weise ein Rotieren um sich fortlaufend ändernde Rotationsachsen der kugelförmigen Aufnahmevorrichtung in einer an den herzustellen Artikel angepassten Weise ermöglicht ist. Insbesondere hat die Erfindung den Vorteil, dass ein derartiges Rotieren um sich fortlaufend ändernde Rotationsachsen der kugelförmigen Aufnahmevorrichtung mittels einer Rotationsvorrichtung möglich ist, die lediglich ein einziges Antriebsrad aufweist, das auf der Außenseite der kugelförmigen Aufnahmevorrichtung abrollt und die kugelförmige Aufnahmevorrichtung zur Rotation antreibt.

Insbesondere muss das Antriebsrad nicht um eine von seiner Rotationsachse verschiedene, insbesondere senkrechte, Achse drehbar sein oder drehbar angetrieben sein. Vielmehr kann die Orientierung der Rotationsachse des Antriebsrades im Raum konstant sein. Allerdings kann, was weitere unten noch im Detail beschreiben ist, vorteilhaft vorgesehen sein, dass das Antriebsrad zusätzlich um eine, insbesondere relativ zur kugelförmigen Aufnahmevorrichtung radial ausgerichtete, weitere Rotationsachse frei rotierbar gelagert ist.

In erfindungsgemäßer Weise und nach einem eigenständigen Erfindungsgedanken wurde zunächst ganz allgemein erkannt, dass es von besonderem Vorteil ist, eine kugelförmige Aufnahmevorrichtung in einer Rotationsvorrichtung entlang einer Rotationskurve zu rotieren, die an den herzustellen Artikel angepasst ist. Ziel ist es dabei, die Rotationkurve derart zu wählen, dass das Rohmaterial innerhalb der Rotationsgussform, die im Inneren der kugelförmigen Aufnahmevorrichtung angeordnet ist, homogen verteilt wird. Hierbei ist es von Vorteil, wenn das Rohmaterial nicht zu oft über denselben Punkt geführt wird, da es sonst zu einer unerwünschten Materialanhäufung an diesem Punkt kommt. Zumeist ist es von Vorteil, wenn einzelne Kreuzungspunkte der Rotationskurve nicht übermäßig oft durchfahren werden und/oder wenn Kreuzungspunkte gleichmäßig verteilt sind.

Außerdem hat sich gezeigt, dass es für einen automatisierten Herstellungsprozess wichtig ist, die kugelförmige Aufnahmevorrichtung zum Ende eines Rotationsgussprozesses exakt in der Ausrichtung anzuhalten, die zum automatisierten Öffnen der kugelförmigen Aufnahmevorrichtung sowie zum automatisierten Entnehmen der hergestellten Artikel und für ein automatisiertes Beschicken mit frischem Rohmaterial erforderlich ist. Auch dies wird durch die vorliegende Erfindung vorteilhaft ermöglicht, wobei der Aufwand für die Ansteuerung dennoch gering ist.

Insbesondere hat die Erfindung den ganz besonderen Vorteil, dass ein präzises Abfahren einer vorgegebenen Rotationskurve und ein präzises Anhalten bei einer vorbestimmten oder vorbestimmbaren Ausrichtung der kugelförmigen Aufnahmevorrichtung möglich ist, ohne in aufwändiger Weise gleichzeitig mehrere Antriebsmotore zueinander synchronisiert anzusteuern zu müssen und ohne die aktuelle Ausrichtung der kugelförmigen Aufnahmevorrichtung aktiv mit zusätzlichen Sensoren überwachen zu müssen. Allerdings eine aktives Überwachen der aktuellen Ausrichtung der kugelförmigen Aufnahmevorrichtung, beispielsweise mit Fühlern und/oder optischen Sensoren bei der erfindungsgemäßen Rotationvorrichtung durchaus möglich und insbesondere zur Überwachung eines automatisierten Produktionsablaufs sinnvoll.

Die Erfindung hat den ganz besonderen Vorteil, dass ein zweidimensionales Rotieren der, vorzugsweise ortsfest angeordneten, kugelförmigen Aufnahmevorrichtung auf ein eindimensionales Ansteuerproblem des erforderlichen Antriebs reduziert ist. Solange der elektronischen Ansteuerung ausgehend von einer bekannten Startposition und bei bekannten Drehrichtung bekannt ist, wie viele Umdrehungen das Antriebsrad oder wie viele Umdrehungen der Antriebsmotor oder ein treibtechnisch zwischengeschaltetes Übertragungsbauteil absolviert hat, kann präzise und eindeutig auf die aktuelle Ausrichtung der kugelförmigen Aufnahmevorrichtung geschlossen werden.

Entsprechend kann umgekehrt, auf Grund dieser eindeutigen Zuordnung, einfach, zuverlässig und präzise eine vorbestimmte oder vorbestimmbare Ausrichtung der kugelförmigen Aufnahmevorrichtung eingestellt werden. Die vorbestimmte oder vorbestimmbare Ausrichtung der kugelförmigen Aufnahmevorrichtung kann beispielsweise eine für ein automatisiertes Öffnen der kugelförmigen Aufnahmevorrichtung sowie für ein automatisiertes Entnehmen der hergestellten Artikel oder für ein automatisiertes Beschicken erforderliche Ausrichtung sein.

Die Führungsvorrichtung der kugelförmigen Aufnahmevorrichtung kann, was nachfolgend an Hand von Beispielen im Detail beschrieben ist, auf unterschiedlichste Weise ausgeführt sein. Insbesondere kann vorteilhaft vorgesehen sein, dass das Antriebsrad eine Gegenführungsvorrichtung aufweist oder als Gegenführungsvorrichtung ausgebildet ist, die mit der Führungsvorrichtung der kugelförmigen Aufnahmevorrichtung zusammenwirkt.

Insbesondere kann vorteilhaft vorgesehen sein, dass die Führungsvorrichtung endlos ausgebildet ist. Beispielsweise kann die Führungsvorrichtung eine auf der Außenseite der kugelförmigen Aufnahmevorrichtung angeordnete Führungsnut aufweisen, die entlang oder parallel zum Abrollweg verläuft, wobei sich das Ende der Führungsnut unmittelbar an den Anfang der Führungsnut anschließt. Auf diese Weise ist erreicht, dass die kugelförmige Aufnahmevorrichtung beliebig lange entlang dem vorgegebenen Abrollweg rotiert werden kann.

Bei einer vorteilhaften Ausführung der erfindungsgemäßen kugelförmigen Aufnahmevorrichtung weist die Führungsvorrichtung eine auf der Außenseite der kugelförmigen Aufnahmevorrichtung angeordnete Führungsnut auf, die entlang oder parallel zum Abrollweg verläuft. Insbesondere kann vorteilhaft vorgesehen sein, dass die Führungsnut durch zwei auf der Außenseite der kugelförmigen Aufnahmevorrichtung angeordnete Leitplanken gebildet ist. Bei einer solchen Ausführung erfolgt das Zusammenwirken der Führungsvorrichtung mit dem Antriebsrad in der Weise, dass jeweils wenigstens der mit der kugelförmigen Aufnahmevorrichtung unmittelbar in Kontakt stehende Teil des Antriebsrades in die auf der Außenseite der kugelförmigen Aufnahmevorrichtung angeordnete Führungsnut eingreift. Die Führungsnut und das Antriebrad sind vorzugsweise derart dimensioniert, dass der in die Führungsnut eingreifende Teil des Antriebsrades in axialer Richtung relativ zu den Leitplanken der Führungsnut etwas Spiel hat. Dies ermöglicht es, dass die Führungsnut zusätzlich zu der ohnehin durch die Kugelform der kugelförmigen Aufnahmevorrichtung erforderlichen Krümmung auf der Kugeloberfläche gekrümmt verlaufen kann, ohne dass es zu einem Verklemmen kommt.

Bei einer anderen, vorteilhaften Ausführung weist die Führungsvorrichtung eine auf der Außenseite der kugelförmigen Aufnahmevorrichtung angeordnete Leitschiene auf, die entlang dem Abrollweg oder parallel zum Abrollweg verläuft. Bei dieser Ausführung kann insbesondere vorgesehen sein, dass das Antriebsrad eine umlaufende Führungsnut aufweist, in die die auf der Außenseite der kugelförmigen Aufnahmevorrichtung angeordnete Leitschiene eingreift. Vorzugsweise hat die Leitschiene in der Führungsnut etwas seitliches Spiel, so dass zusätzlich zu der ohnehin durch die Kugelform der kugelförmigen Aufnahmevorrichtung erforderlichen Krümmung ein gekrümmter Verlauf der Leitschiene, insbesondere abweichend von einem Großkreis oder Kleinkreis, auf der Außenseite der kugelförmigen Aufnahmevorrichtung ermöglicht ist.

Ein Großkreis ist ein größtmöglicher Kreis auf einer Kugeloberfläche. Sein Mittelpunkt fällt immer mit dem Mittelpunkt der Kugel zusammen und ein Schnitt auf dem Großkreis teilt die Kugel in jedem Fall in zwei gleiche Hälften. Kleinkreise sind die Kreise auf einer Kugeloberfläche, deren Ebenen nicht den Kugelmittelpunkt enthalten.

Bei einer ganz besonders vorteilhaften Ausführung ist die Führungsvorrichtung durch eine Vielzahl von, insbesondere kreisrunden, Öffnungen gebildet, die entlang dem Abrollweg in der Außenseite der kugelförmigen Aufnahmevorrichtung angeordnet sind. Das Antriebsrad kann als Gegenführungselement eine Verzahnung aufweisen, die dazu ausgebildet ist, mit den entlang dem Abrollweg verlaufenden Öffnungen zusammenzuwirken. Insbesondere kann vorteilhaft vorgesehen sein, dass Antriebsrad eine Verzahnung aufweist, deren Zähne in die entlang dem Abrollweg verlaufende Öffnungen eingreifen.

Um ein präzises Einhalten einer vorgegebenen Rotationskurve zu gewährleisten kann insbesondere vorgesehen sein, dass die Außenabmessungen der Zähne am Zahnfuß gleich den Innenabmessungen der Öffnungen sind und/oder der Außendurchmesser der Zähne am Zahnfuß dem Innendurchmesser der Öffnungen entspricht. Auf diese Weise ist ein Spiel der kugelförmigen Aufnahmevorrichtung relativ zu einem vollständig in eine Öffnung eingeführten Zahn vermieden, so dass eine präzise Ausrichtung der kugelförmigen Aufnahmevorrichtung ermöglicht ist. Wenn lediglich ein einziger Zahn derart in Eingriff ist, besteht hinsichtlich der Ausrichtung der kugelförmigen Aufnahmevorrichtung lediglich noch ein Freiheitsgrad einer Drehung der kugelförmigen Aufnahmevorrichtung um die radiale Mittelachse des eingreifenden Zahnes.

Um die Ausrichtung der kugelförmigen Aufnahmevorrichtung eindeutig zu definieren, ist daher bei einer besonderen Ausführung vorgesehen, dass beim Abrollen des Antriebsrades stets wenigstens zwei Zähne der Verzahnung mit den entlang dem Abrollweg verlaufenden Öffnungen in eingriff sind. Um hierbei einen gekrümmten Verlauf der Anordnung der Öffnungen zusätzlich zu der ohnehin durch die Kugelform der kugelförmigen Aufnahmevorrichtung erforderlichen Krümmung, also abweichend von einem Großkreis oder einem Kleinkreis, zu ermöglichen, können die Zähne der Verzahnung vorteilhaft kegelförmig oder kegelstumpfförmig ausgebildet sein. Dies ermöglicht es, dass der nächste Zahn, insbesondere außermittig, auch dann in die nächste Öffnung eingreifen kann, wenn die nächste Öffnung auf Grund des gekrümmten Verlaufs der Anordnung der Öffnungen etwas seitlich versetzt ist, weil die Zahnköpfe einen kleineren Durchmesser aufweist, als die Öffnungen. Beim weiteren Eingreifen des nächsten Zahnes zentriert sich die nächste Öffnung relativ zum Zahn wodurch sich die Ausrichtung der kugelförmigen Aufnahmevorrichtung anpasst, so dass der vorgegebene Abrollweg präzise eingehalten wird.

Bei einer vorteilhaften Ausführung sind die einzelnen Zähne zerstörungsfrei lösbar an einem Grundkörper des Antriebsrades befestigt. Insbesondere können die Zähne beispielsweise mit einem Schraubgewinde in den Grundkörper eingeschraubt sein. Dies ermöglicht es, einzelne Zähne auszutauschen, wenn sie verschlissen sind, ohne dass das gesamte Antriebsrad ausgetauscht werden muss.

Alternativ zu der beschriebenen Ausführung, bei der Öffnungen in der kugelförmigen Aufnahmevorrichtung für eine Verzahnung des Antriebsrades vorgesehen sind, kann umgekehrt auch vorgesehen sein, dass das Antriebsrad Öffnungen aufweist, in die entlang dem Abrollweg auf der Außenseite der kugelförmigen Aufnahmevorrichtung angeordnete Zähne eingreifen.

Bei einer anderen Ausführung weist die kugelförmige Aufnahmevorrichtung eine entlang dem Abrollweg verlaufende Verzahnung auf, die mit einer Gegenverzahnung des Antriebsrades kämmt.

Bei einer ganz besonders vorteilhaften Ausführung ist die kugelförmige Aufnahmevorrichtung aus mehreren Hohlkugelstücken zusammengesetzt. Insbesondere kann vorteilhaft vorgesehen sein, dass die einzelnen Hohlkugelstücke vor dem Zusammensetzen mit unterschiedlichen Abschnitten der Führungsvorrichtung versehen werden, die nach dem Zusammensetzen der Hohlkugelstücke die gesamte Führungsvorrichtung bilden. Beispielsweise kann vorteilhaft vorgesehen sein, dass einzelne Hohlkugelstücke Abschnitte einer Führungsnut aufweisen und die Hohlkugelstücke nach dem Zusammensetzen derart aneinandergefügt sind, dass sich die Führungsnutabschnitte ohne Versatz aneinander reihen.

Insbesondere kann vorteilhaft vorgesehen sein, dass die kugelförmigen Aufnahmevorrichtung wenigstens zwei Hohlkugelsegmente aufweist, die zum Öffnen der kugelförmigen Aufnahmevorrichtung wenigstens teilweise voneinander gelöst oder, beispielsweise mittels eines Scharniers, relativ zueinander verschwenkt werden können.

Ein Öffnen der kugelförmigen Aufnahmevorrichtung ist nötig, um die kugelförmige Aufnahmevorrichtung mit wenigstens einer Rotationsgussform zu versehen und um die in der kugelförmigen Aufnahmevorrichtung angeordnete Rotationsgussform zu beschicken sowie um fertige Rotationsgussprodukte entnehmen zu können. In vorteilhafter Weise kann vorgesehen sein, dass wenigstens eines der wenigstens zwei Hohlkugelsegmente, insbesondere wie oben beschreiben, aus mehreren Hohlkugelstücken zusammengesetzt ist.

Insbesondere kann vorteilhaft vorgesehen sein, dass mehrere Hohlkugelstücke samt ihrem jeweiligen Abschnitt der Führungsvorrichtung gleich ausgebildet sind, insbesondere eine gleiche Form und/oder Größe aufweisen. Eine derartige Ausführung ermöglicht eine kostengünstige und effiziente Massenproduktion von kugelförmigen Aufnahmevorrichtungen.

Bei einer ganz besonders vorteilhaften Ausführung weist die kugelförmige Aufnahmevorrichtung zwei elektrisch leitende Segmente auf, die entlang dem Abrollweg, insbesondere mittels der Führungsvorrichtung, voneinander elektrisch isoliert sind. Eine solche Ausführung hat den ganz besonderen Vorteil, dass eine Versorgung von einer in der kugelförmigen Aufnahmevorrichtung angeordneten Vorrichtung, beispielsweise einer elektrischen Heizung, mit elektrischer Energie ermöglicht ist. Beispielsweise ist es auf diese Weise ermöglicht, eine Rotationsgussform elektrisch zu beheizen oder elektrisch zu kühlen.

Bei einer möglichen Ausführungsform weist die Rotationsvorrichtung zwei Kontaktelemente auf, die derart positioniert sind, dass der eine stets mit einem der beiden elektrisch leitenden Segmente und der andere stets mit dem anderen der beiden elektrisch leitenden Segmente in Kontakt steht. Auf diese Weise ist es ermöglicht, die beiden Segmente an ein unterschiedliches elektrisches Potentialniveau anzuschließen. Zum Betreiben einer im Inneren der kugelförmigen Aufnahmevorrichtung angeordneten Heizung muss diese dann lediglich sowohl mit dem einen Segment, als auch mit dem anderen Segment von innen elektrisch leitend verbunden werden.

Bei einer ganz besonders vorteilhaften Ausführung und nach einem eigenständigen Erfindungsgedanken, der auch losgelöst vom Vorhandensein einer Führungsvorrichtung und/oder einer Gegenführungsvorrichtung realisiert werden kann, ist vorteilhaft vorgesehen, dass das Antriebsrad als elektrisches Kontaktelement zum Übertragen von elektrischem Strom auf die kugelförmige Aufnahmevorrichtung ausgebildet ist oder dass das Antriebsrad wenigstens ein, insbesondere als Kontaktrolle ausgebildetes, Kontaktelement zum Übertragen von elektrischen Strom auf die kugelförmigen Aufnahmevorrichtung aufweist.

Bei einer besonderen Ausführung betreffend diesen eigenständigen Erfindungsgedanken, weist die kugelförmige Aufnahmevorrichtung zwei entlang dem Abrollweg, insbesondere mittels der Führungsvorrichtung, voneinander elektrisch isolierte Segmente auf. Hierbei können an dem Antriebsrad vorteilhaft zwei Kontaktelemente angeordnet sein, von denen einer stets mit dem einen der Segmente und der andere stets mit dem anderen der Segmente in elektrisch leitendem Kontakt steht. Insbesondere können die Kontaktelemente als Kontaktrollen ausgebildet sein, die auf der Außenseite der kugelförmigen Aufnahmevorrichtung abrollen und axial auf unterschiedlichen Seiten des Antriebsrades angeordnet sind. Alternativ ist es auch möglich, dass die Kontaktelemente als Schleifkontakte ausgebildet sind, die an der Außenseite der kugelförmigen Aufnahmevorrichtung entlang schleifen.

Wie bereits erwähnt kann vorteilhaft vorgesehen sein, dass die elektrische Isolierung zwischen den beiden elektrisch leitenden Segmenten durch die Führungsvorrichtung realisiert sein kann. Beispielsweise kann die Führungsvorrichtung wenigstens teilweise als entlang dem Abrollweg gebogener Nichtleiter ausgebildet sein, an den sich die beiden Segmente von unterschiedlichen Seiten kommend anschließen.

Bei einer besonders vorteilhaften Ausführung der Rotationsvorrichtung ist das Antriebsrad um eine Rotationsachse rotierbar gelagert, die relativ zu der kugelförmigen Aufnahmevorrichtung tangential ausgerichtet ist, womit gemeint ist, dass die Rotationsachse eine Parallele zu einer Tangente an die Außenseite der kugelförmigen Aufnahmevorrichtung ist.

Vorzugsweise ändert sich die Ausrichtung der Rotationsachse relativ zur Position der kugelförmigen Aufnahmevorrichtung beim Rotationsgussprozess nicht. Vielmehr ist es für ein präzises Abfahren der durch die Führungsvorrichtung vorgegebenen Abrollbahn von Vorteil, wenn die Rotationsachse und die Position des Antriebsrades, insbesondere relativ zum Mittelpunkt der kugelförmigen Aufnahmevorrichtung, ortsfest bleiben.

Vorzugweise ist die kugelförmige Aufnahmevorrichtung derart rotierbar gelagert, dass die bei einem Rotationsgussvorgang ortsfest bleibt und ausschließlich um ihren Mittelpunkt rotiert.

Insbesondere zum Erreichen eine Verschleißverringerung ist bei einer ganz besonders vorteilhaften Ausführung vorgesehen, dass das Antriebsrad zusätzlich um eine, insbesondere relativ zur kugelförmigen Aufnahmevorrichtung radial ausgerichtete, weitere Rotationsachse frei rotierbar gelagert ist. Auf diese Weise ist vorteilhaft erreicht, dass das Antriebsrad der zusätzlichen Krümmung des Abrollweges, die nicht durch die Kugelform der Aufnahmevorrichtung bedingt ist, einfach und weitgehend spannungs- und reibungsreduziert folgen kann. Dies ist insbesondere von Vorteil, wenn das Antriebsrad Öffnungen aufweist, in die die Zähne einer entlang dem Abrollweg angeordneten Verzahnung der kugelförmigen Aufnahmevorrichtung eingreifen, oder wenn das Antriebsrad eine Verzahnung aufweist, deren Zähne in entlang dem Abrollweg verlaufende Öffnungen in der Außenseite der kugelförmigen Aufnahmevorrichtung eingreifen.

Um bei einer solchen Ausführung ein Anhalten der kugelförmigen Aufnahmevorrichtung zum Ende eines Rotationsgussvorganges in einer vorbestimmten Drehstellung und Ausrichtung zu gewährleisten, kann vorteilhaft vorgesehen sein, dass die freie Rotierbarkeit um die weitere Rotationsachse zum Ende eines Rotationsgussvorganges aufgehoben werden kann. Hierbei ist es insbesondere von Vorteil, wenn das Antriebsrad bezogen auf die weitere Rotationsachse, insbesondere zusammen mit seinem Antriebsmotor, in einer vorgestimmten Rotationsstellung arretierbar ist. Dies kann beispielsweise mittels eines federbelasteten Sperrenstiftes realisiert sein, der während eines Rotationsgussvorganges in einer zurückgezogenen Stellung, beispielsweise mittels eines Elektromagneten, gehalten wird und der zum Ende eines Rotationsgussvorganges, beispielsweise durch Lösen des Elektromagneten, freigegeben wird, so dass er zum Arretieren in eine Sperrenöffnung des Antriebsrades oder der rotierbaren Baueinheit, zu der das Antriebsrad und der Antriebsmotor gehören, eingreifen kann. Die Sperrenöffnung ist derart ausgerichtet, dass das Antriebsrad oder die rotierbare Baueinheit, zu der das Antriebsrad und der Antriebsmotor gehören, die gewünschte Rotationsstellung aufweisen, wenn der Sperrenstift in die Sperrenöffnung eingerastet ist.

Bei einer besonderen Ausführung der Rotationsvorrichtung ist ein Sensor vorhanden, der die Drehstellung und/oder die Anzahl von Umdrehungen des Antriebsrades ausgehend von einer Startstellung oder die Anzahl von Umdrehungen einer Antriebswelle des Antriebsmotors ausgehend von einer Startstellung oder die Anzahl von Umdrehungen eines triebtechnisch zwischengeschalteten Rotationsbauteils, ausgehend von einer Startstellung, misst. Anhand dieser Informationen kann aufgrund der eindeutigen Kopplung der Bewegung des Antriebrades relativ zur Bewegung der kugelförmigen Aufnahmevorrichtung stets auf die aktuelle Ausrichtung der kugelförmigen Aufnahmevorrichtung geschlossen werden.

Vorzugsweise ändert sich die Position der kugelförmigen Aufnahmevorrichtung relativ zum Antriebsrad während eines Rotationsgussprozesses nicht. Vielmehr kann vorteilhaft vorgesehen sein, dass das Antriebsrad und die kugelförmigen Aufnahmevorrichtung zueinander ortsfest bleiben, während die kugelförmige Aufnahmevorrichtung rotiert. Zu diesem Zweck können Führungselemente vorhanden sein, die die kugelförmige Aufnahmevorrichtung in ihrer Position halten. Das Antriebsrad kann vorteilhaft unter der kugelförmigen Aufnahmevorrichtung angeordnet sein. Insbesondere kann das Antriebsrad selbst als Führungsvorrichtung fungieren, die die kugelförmige Aufnahmevorrichtung in Position hält. Insbesondere kann das Antriebsrad dazu ausgebildet sein, das Gewicht der kugelförmigen Aufnahmevorrichtung, zumindest im Wesentlichen, zu tragen.

Vorzugsweise ist ausschließlich ein einziges Antriebsrad vorhanden dass auf der Außenseite der kugelförmigen Aufnahmevorrichtung abrollt und die kugelförmige Aufnahmevorrichtung zur Rotation antreibt.

Ganz allgemein und nach einem eigenständigen Erfindungsgedanken ist eine kugelförmige Aufnahmevorrichtung zum Aufnehmen wenigstens einer Rotationsgussform, die dazu ausgebildet und bestimmt ist, in einer Rotationsvorrichtung mittels eines auf der Außenseite der kugelförmigen Aufnahmevorrichtung abrollenden Antriebsrades zur Rotation angetrieben zu werden, besonders vorteilhaft, wobei die Aufnahmevorrichtung wenigstens eine Führungsvorrichtung aufweist, die bewirkt, dass ein auf der Außenseite der kugelförmigen Aufnahmevorrichtung abrollendes Antriebsrad einem vorbestimmten Abrollweg auf der Außenseite der kugelförmigen Aufnahmevorrichtung folgt. Eine solche Aufnahmevorrichtung kann zusätzlich die Merkmales wenigstens eines der nachfolgenden Ansprüche 2 bis 14 aufweisen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein schematisches Ausführungsbeispiel einer erfindungsgemäßen kugelförmigen Aufnahmevorrichtung,
- Fig. 2: eine Detailansicht eines ersten Ausführungsbeispiels einer erfindungsgemäßen Rotationsvorrichtung,
- Fig. 3: eine Detailansicht eines zweiten Ausführungsbeispiels einer erfindungsgemäßen Rotationsvorrichtung,
- Fig. 4: ein drittes Ausführungsbeispiel einer erfindungsgemäßen Rotationsvorrichtung,
- Fig. 5: ein viertes Ausführungsbeispiel einer erfindungsgemäßen Rotationsvorrichtung und
- Fig. 6: ein fünftes Ausführungsbeispiel einer erfindungsgemäßen Rotationsvorrichtung.

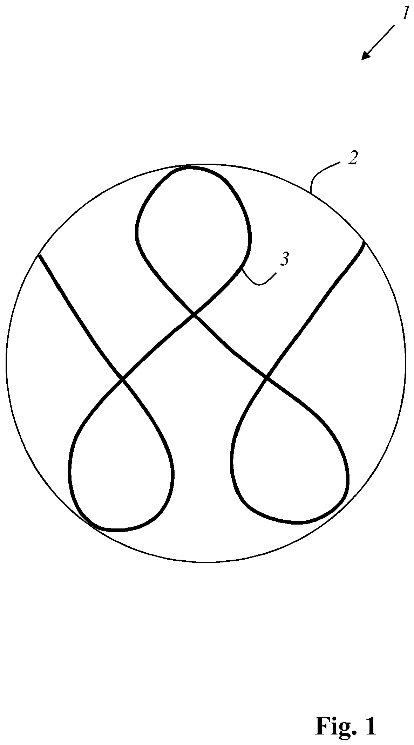

Fig. 1 zeigt eine kugelförmige Aufnahmevorrichtung 1 zum Aufnehmen wenigstens einer Rotationsgussform, die dazu ausgebildet und bestimmt ist, in einer Rotationsvorrichtung mittels eines auf der Außenseite 2 der kugelförmigen Aufnahmevorrichtung 1 abrollenden Antriebsrades zur Rotation angetrieben zu werden. Die kugelförmige Aufnahmevorrichtung 1 weist eine Führungsvorrichtung 3 auf, die bewirkt, dass ein auf der Außenseite der kugelförmigen Aufnahmevorrichtung 1 abrollendes Antriebsrad einen vorbestimmten Abrollweg auf der Außenseite 2 der kugelförmigen Aufnahmevorrichtung 1 folgt.

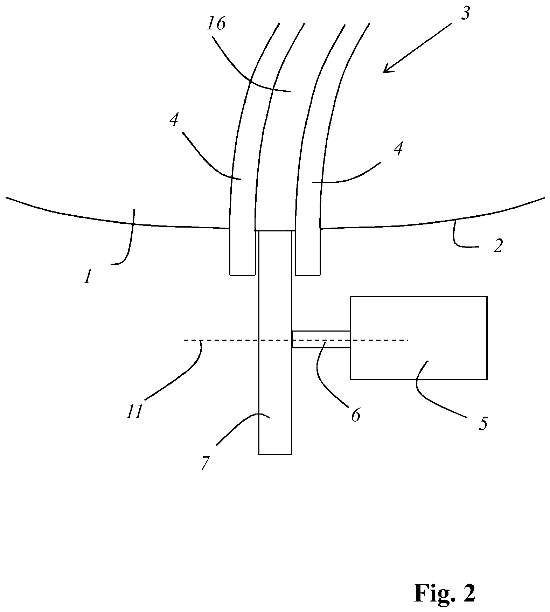

Fig. 2 zeigt eine Detailansicht eines ersten Ausführungsbeispiels einer erfindungsgemäßen Rotationsgussvorrichtung, die eine erfindungsgemäße kugelförmige Aufnahmevorrichtung 1 mit einer Führungsvorrichtung 3 beinhaltet. Die Führungsvorrichtung 3 weist eine auf der Außenseite der kugelförmigen Aufnahmevorrichtung 1 angeordnete Führungsnut 16 auf, die entlang dem Abrollweg verläuft. Die Führungsnut 16 ist durch zwei auf der Außenseite der kugelförmigen Aufnahmevorrichtung 1 angeordnete Leitplanken 4 gebildet.

Die Rotationsvorrichtung weist außerdem ein mittels eines Antriebsmotors 5 über eine Antriebswelle 6 angetriebenes Antriebsrad 7 auf, das auf der Außenseite 2 der kugelförmigen Aufnahmevorrichtung 1 abrollt und die kugelförmige Aufnahmevorrichtung 1 zur Rotation antreibt.

Zwischen dem in die Führungsnut 16 eingreifenden Teil des Antriebsrades 7 und den Leitplanken 4 besteht ein seitliches Spiel, so dass ein gekrümmter Verlauf (zusätzlich zu der ohnehin durch die Kugelform der kugelförmigen Aufnahmevorrichtung erforderlichen Krümmung) der Führungsvorrichtung auf der Außenseite der kugelförmigen Aufnahmevorrichtung 1 ermöglicht ist. Das Antriebsrad kann auf seiner Außenumfangsseite vorteilhaft mit einem reibungserhöhenden Belag, beispielsweise mit einem Gummibelag, versehen sein um zuverlässig ein Drehmoment auf die kugelförmige Aufnahmevorrichtung 1 übertragen zu können.

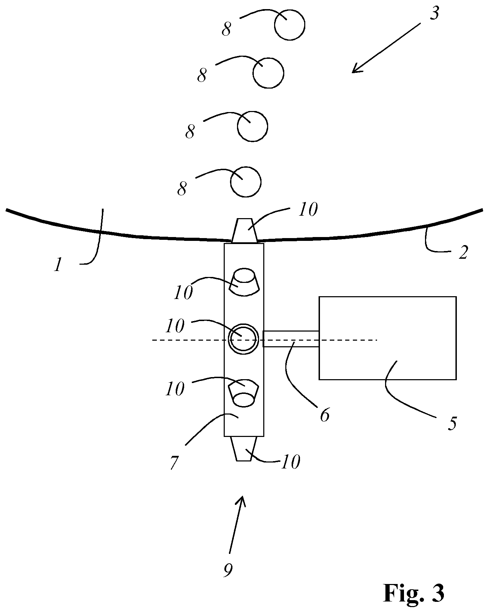

Figur 3 zeigt eine Detailansicht eines zweiten Ausführungsbeispiels einer erfindungsgemäßen Rotationsvorrichtung. Bei diesem Ausführungsbeispiel weist die Führungsvorrichtung 3 entlang dem Abrollweg angeordnete Öffnungen 8 auf, die dazu ausgebildet sind, mit einer Verzahnung 9 des Antriebsrades 7 zusammenzuwirken. Auch bei diesem Ausführungsbeispiel wird das Antriebsrad 7 mittels eines Antriebsmotors 5 zur Rotation angetrieben.

Die Zähne 10 der Verzahnung 9 sind kegelstumpfförmig ausgebildet. Der Außendurchmesser der Zähne 10 am Zahnfuß entspricht dem Innendurchmesser der Öffnungen 8. In Richtung von der Rotationsachse 11, um die das Antriebsrad 7 rotiert, weg verjüngt sich der Durchmesser der Zähne 10. Durch diese Weise ist es ermöglicht, dass der Verlauf der Öffnungen 8 auf der Außenseite des kugelförmigen Aufnahmevorrichtung 1 (abweichend von einem Großkreis oder einem Kleinkreis) gekrümmt verlaufen kann.

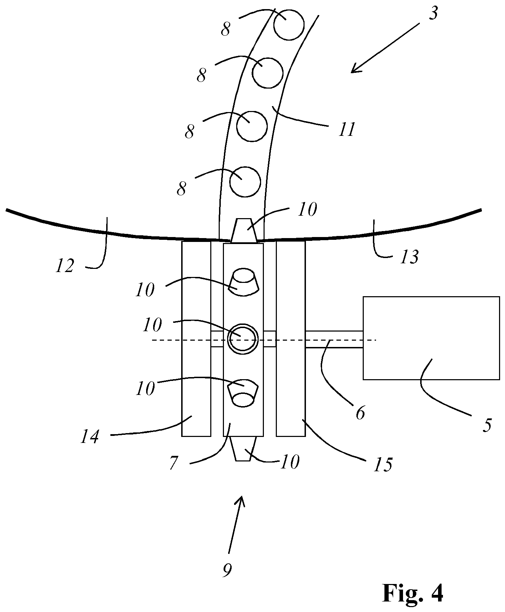

Figur 4 zeigt eine Detailansicht eines dritten Ausführungsbeispiels einer erfindungsgemäßen Rotationsvorrichtung. Bei diesem Ausführungsbeispiel weist die Führungsvorrichtung ein mit Öffnungen 8 versehenes Band 11 aus einem elektrisch isolierenden Material auf. Das Band 11 verläuft entlang dem Abrollweg. Außerdem dient das Band 11 als elektrische Isolierung zwischen einem ersten elektrischen leitenden Segment 12 und einem zweiten elektrisch leitenden Segment 13 der kugelförmigen Aufnahmevorrichtung 1.

An dem Antriebsrad 7 ist eine erste Kontaktrolle 14 und eine zweite Kontaktrolle 15 derart angeordnet, dass die erste Kontaktrolle stets auf der Außenfläche des ersten leitenden Segments 12 und die zweite Kontaktrolle 15 stets auf der Außenfläche des zweiten elektrisch leitenden Segments 13 abrollt. Die Kontaktrollen 14, 15 sind koaxial zu dem Antriebsrad 7 angeordnet. Die Kontaktrollen 14, 15 liegen auf unterschiedlichem elektrischem Potentialniveau, um elektrischen Strom über die elektrisch leitende Segmente 12 und 13 in das Innere kugelförmigen Aufnahmevorrichtung 1 übertragen zu können. Dies beispielsweise, um eine im Inneren der kugelförmigen Aufnahmevorrichtung 1 angeordnete Rotationsgussform (nicht dargestellt) elektrisch beheizen oder elektrisch kühlen zu können.

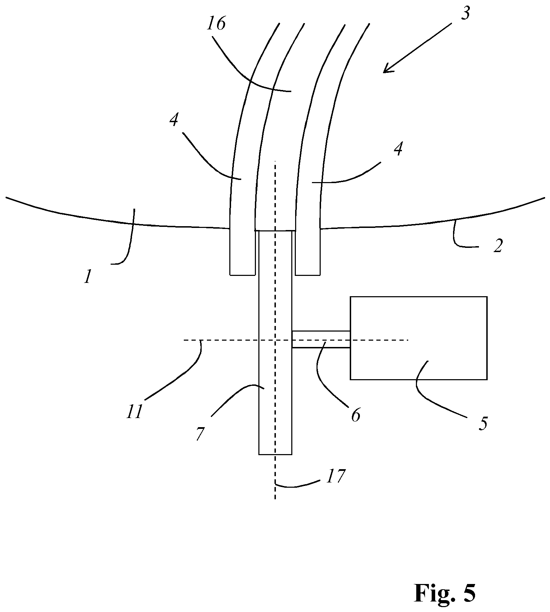

Figur 5 zeigt ein viertes Ausführungsbeispiel einer erfindungsgemäßen Rotationsvorrichtung, das im Wesentlichen genauso aufgebaut ist, wie das in Figur 2 gezeigte Ausführungsbeispiel. Allerding ist bei dem in Fig. 5 gezeigten Ausführungsbeispiel die Baueinheit, die das Antriebsrad 7 und den Antriebsmotor 5 beinhaltet, um eine relativ zur kugelförmigen Aufnahmevorrichtung 1 radial ausgerichtete und durch das Antriebsrad 7, radial hindurch verlaufende weitere Rotationsachse 17 frei rotierbar gelagert.

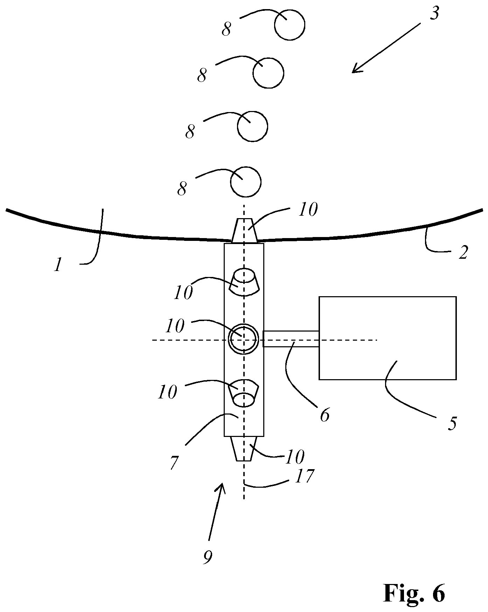

Figur 6 zeigt ein viertes Ausführungsbeispiel einer erfindungsgemäßen Rotationsvorrichtung, das im Wesentlichen genauso aufgebaut ist, wie das in Figur 3 gezeigte Ausführungsbeispiel. Allerding ist bei dem in Figur 6 gezeigten Ausführungsbeispiel die Baueinheit, die das Antriebsrad 7 und den Antriebsmotor 5 beinhaltet, um eine relativ zur kugelförmigen Aufnahmevorrichtung 1 radial ausgerichtete und durch das Antriebsrad 7, radial hindurch verlaufende weitere Rotationsachse 17 frei rotierbar gelagert.

Bei denen in den Figuren 5 und 6 gezeigten Ausführungsbeispielen wird durch die freie Rotierbarkeit der Baueinheit, die das Antriebsrad 7 und den Antriebsmotor 5 beinhaltet, vorteilhaft eine Verringerung des Verschleißes erreicht.

Um bei einer solchen Ausführung ein Anhalten der kugelförmigen Aufnahmevorrichtung 1 zum Ende eines Rotationsgussvorganges in einer vorbestimmten Drehstellung und Ausrichtung zu gewährleisten, kann die freie Rotierbarkeit um die weitere Rotationsachse 17 zum Ende eines Rotationsgussvorganges aufgehoben werden. Hierzu kann die Baueinheit, die das Antriebsrad 7 und den Antriebsmotor 5 beinhaltet, bezogen auf die weitere Rotationsachse 17 in einer vorgestimmten Rotationsstellung arretiert werden. Dies kann beispielsweise mittels eines (nicht dargestellten) federbelasteten Sperrenstiftes realisiert sein, der während eines Rotationsgussvorganges in einer zurückgezogenen Stellung, beispielsweise mittels eines (nicht dargestellten) Elektromagneten, gehalten wird und der zum Ende eines Rotationsgussvorganges, beispielsweise durch Lösen des Elektromagneten, freigegeben wird, so dass er zum Arretieren in eine (nicht dargestellte) Sperrenöffnung der Baueinheit, die das Antriebsrad 7 und den Antriebsmotor 5 beinhaltet, eingreifen kann. Die Sperrenöffnung ist derart ausgerichtet, dass die Baueinheit die gewünschte Rotationsstellung aufweist, sobald der Sperrenstift in die Sperrenöffnung eingerastet ist.

### Bezugszeichenliste:

- 1: kugelförmige Aufnahmevorrichtung
- 2: Außenseite
- 3: Führungsvorrichtung
- 4: Leitplanke
- 5: Antriebsmotor
- 6: Antriebswelle
- 7: Antriebsrad
- 8: Öffnungen
- 9: Verzahnung
- 10: Zähne
- 11: Rotationsachse
- 12: erstes elektrisch leitendes Segment
- 13: zweites elektrisch leitendes Segment
- 14: erste Kontaktrolle
- 15: zweite Kontaktrolle
- 16: Führungsnut
- 17: weitere Rotationsachse

## Patentansprüche

1. Kugelförmige Aufnahmevorrichtung (1) zum Aufnehmen wenigstens einer Rotationsgussform, die dazu ausgebildet und bestimmt ist, in einer Rotationsvorrichtung mittels eines auf der Außenseite (2) der kugelförmigen Aufnahmevorrichtung (1) abrollenden Antriebsrades (7) zur Rotation angetrieben zu werden, wobei die Aufnahmevorrichtung (1) wenigstens eine Führungsvorrichtung (3) aufweist, die bewirkt, dass ein auf der Außenseite (2) der kugelförmigen Aufnahmevorrichtung (1) abrollendes Antriebsrad (7) einem vorbestimmten Abrollweg auf der Außenseite (2) der kugelförmigen Aufnahmevorrichtung (1) folgt, **dadurch gekennzeichnet, dass** der Abrollweg zusätzlich zu einer Krümmung, die durch die Kugelform der Aufnahmevorrichtung (1) bedingt ist, eine weitere Krümmung aufweist und/oder dass der Abrollweg nicht ausschließlich entlang einem Großkreis oder einem Kleinkreis der Aufnahmevorrichtung (1) verläuft.

2. Kugelförmige Aufnahmevorrichtung (1) nach Anspruch 1, **dadurch gekennzeichnet, dass**
a. die Führungsvorrichtung (3) eine auf der Außenseite (2) der kugelförmigen Aufnahmevorrichtung (1) angeordnete Führungsnut (16) aufweist, die entlang oder parallel zum Abrollweg verläuft, und/oder dass
b. die Führungsvorrichtung (3) eine auf der Außenseite (2) der kugelförmigen Aufnahmevorrichtung (1) angeordnete Führungsnut (16) aufweist, die entlang oder parallel zum Abrollweg verläuft, wobei die Führungsnut (16) durch zwei auf der Außenseite (2) der kugelförmigen Aufnahmevorrichtung (1) angeordnete Leitplanken (4) gebildet ist, und/oder dass
c. die Führungsvorrichtung (3) eine auf der Außenseite (2) der kugelförmigen Aufnahmevorrichtung (1) angeordnete Führungsnut (16) aufweist, die zusätzlich zu einer Krümmung, die durch die Kugelform der Aufnahmevorrichtung (1) bedingt ist, eine weitere Krümmung aufweist und/oder dass
d. die Führungsvorrichtung (3) eine auf der Außenseite (2) der kugelförmigen Aufnahmevorrichtung (1) angeordnete Führungsnut (16) aufweist, die nicht ausschließlich entlang einem Großkreis oder einem Kleinkreis der Aufnahmevorrichtung (1) verläuft.

3. Kugelförmige Aufnahmevorrichtung (1) nach einem der Ansprüche 1 bis 2, **dadurch gekennzeichnet, dass**
a. die Führungsvorrichtung (3) eine auf der Außenseite (2) der kugelförmigen Aufnahmevorrichtung (1) angeordnete Leitschiene aufweist, die entlang dem Abrollweg oder parallel zum Abrollweg verläuft, und/oder dass
b. die Führungsvorrichtung (3) eine auf der Außenseite (2) der kugelförmigen Aufnahmevorrichtung (1) angeordnete Leitschiene aufweist, die entlang dem Abrollweg oder parallel zum Abrollweg verläuft und die zusätzlich zu einer Krümmung, die durch die Kugelform der Aufnahmevorrichtung (1) bedingt ist, eine weitere Krümmung aufweist und/oder dass
c. die Führungsvorrichtung (3) eine auf der Außenseite (2) der kugelförmigen Aufnahmevorrichtung (1) angeordnete Leitschiene aufweist, die entlang dem Abrollweg oder parallel zum Abrollweg verläuft und die nicht ausschließlich entlang einem Großkreis oder einem Kleinkreis der Aufnahmevorrichtung (1) verläuft.

4. Kugelförmige Aufnahmevorrichtung (1) nach einem der Ansprüche 1 bis 3, **dadurch gekennzeichnet, dass**
a. die Führungsvorrichtung (3) entlang dem Abrollweg verlaufende Öffnungen (8) in der Außenseite (2) der kugelförmigen Aufnahmevorrichtung (1) aufweist, die dazu ausgebildet sind, mit einer Verzahnung (9) des Antriebsrades (7) zusammen zu wirken, und/oder dass
b. die Führungsvorrichtung (3) entlang dem Abrollweg verlaufende Öffnungen (8) in der Außenseite (2) der kugelförmigen Aufnahmevorrichtung (1) aufweist, die dazu ausgebildet sind, mit einer Verzahnung (9) des Antriebsrades (7) zusammen zu wirken, wobei die Öffnungen (8) zusätzlich zu einer Krümmung, die durch die Kugelform der Aufnahmevorrichtung (1) bedingt ist, entlang einer weiteren Krümmung verlaufen, und/oder dass
c. die Führungsvorrichtung (3) entlang dem Abrollweg verlaufende Öffnungen (8) in der Außenseite (2) der kugelförmigen Aufnahmevorrichtung (1) aufweist, die dazu ausgebildet sind, mit einer Verzahnung (9) des Antriebsrades (7) zusammen zu wirken, wobei die Öffnungen (8) nicht ausschließlich entlang einem Großkreis oder einem Kleinkreis der Aufnahmevorrichtung (1) verlaufen.

5. Kugelförmige Aufnahmevorrichtung (1) nach einem der Ansprüche 1 bis 4, **dadurch gekennzeichnet, dass**
a. die Führungsvorrichtung (3) auf der Außenseite (2) eine entlang dem Abrollweg verlaufende Verzahnung aufweist, die dazu ausgebildet sind, mit einer Gegenverzahnung des Antriebsrades (7) zusammen zu wirken, und/oder dass
b. die Führungsvorrichtung (3) auf der Außenseite (2) eine entlang dem Abrollweg verlaufende Verzahnung aufweist, die dazu ausgebildet sind, mit einer Gegenverzahnung des Antriebsrades (7) zusammen zu wirken, und die zusätzlich zu einer Krümmung, die durch die Kugelform der Aufnahmevorrichtung (1) bedingt ist, entlang einer weiteren Krümmung verläuft, und/oder dass
c. die Führungsvorrichtung (3) auf der Außenseite (2) eine entlang dem Abrollweg verlaufende Verzahnung aufweist, die dazu ausgebildet sind, mit einer Gegenverzahnung des Antriebsrades (7) zusammen zu wirken, und die nicht ausschließlich entlang einem Großkreis oder einem Kleinkreis der Aufnahmevorrichtung (1) verläuft.

6. Kugelförmige Aufnahmevorrichtung (1) nach einem der Ansprüche 1 bis 5, **dadurch gekennzeichnet, dass**
a. die kugelförmige Aufnahmevorrichtung (1) zwei elektrisch leitende Segmente (12, 13) aufweist, die entlang dem Abrollweg, insbesondere mittels der Führungsvorrichtung (3), voneinander elektrisch isoliert sind, oder dass
b. die kugelförmige Aufnahmevorrichtung (1) aus mehreren Hohlkugelstücken zusammengesetzt ist, die, insbesondere bereits vor dem Zusammensetzen, unterschiedliche Abschnitte der Führungsvorrichtung (3) aufweisen.

7. Rotationsvorrichtung, die eine kugelförmige Aufnahmevorrichtung (1) nach einem der Ansprüche 1 bis 6 und ein mittels eines Antriebsmotors (5) angetriebenes Antriebsrad (7), das auf der Außenseite (2) der kugelförmigen Aufnahmevorrichtung (1) abrollt und die kugelförmige Aufnahmevorrichtung (1) zur Rotation antreibt, aufweist.

8. Rotationsvorrichtung nach Anspruch 7, **dadurch gekennzeichnet, dass**
a. das Antriebsrad (7) eine Gegenführungsvorrichtung aufweist oder als Gegenführungsvorrichtung ausgebildet ist, die mit der Führungsvorrichtung (3) der kugelförmigen Aufnahmevorrichtung (1) zusammen wirkt, und/oder dass
b. das Antriebsrad (7) um eine, insbesondere relativ zur kugelförmigen Aufnahmevorrichtung (1) tangential ausgerichtete, Rotationsachse rotierbar gelagert ist, und/oder dass
c. das Antriebsrad (7) um eine, insbesondere relativ zur kugelförmigen Aufnahmevorrichtung (1) tangential ausgerichtete, Rotationsachse rotierbar gelagert ist und dass das Antriebsrad (7) oder das Antriebsrad (7) zusammen mit dem Antriebsmotor (5) zusätzlich um eine, insbesondere relativ zur kugelförmigen Aufnahmevorrichtung (1) radial ausgerichtete, weitere Rotationsachse (17), insbesondere frei, rotierbar gelagert ist.

9. Rotationsvorrichtung nach Anspruch 7 oder 8, **dadurch gekennzeichnet, dass** ein Sensor vorhanden ist, der die Drehstellung und/oder eine Anzahl von Umdrehungen des Antriebsrades (7) oder einer Antriebswelle (6) des Antriebsmotors (5) oder eines triebtechnisch zwischengeschalteten Rotationsübertragungsbauteils misst.

10. Rotationsvorrichtung nach einem der Ansprüche 7 bis 9, **dadurch gekennzeichnet, dass**
a. ausschließlich ein einziges Antriebsrad (7) vorhanden ist, das auf der Außenseite (2) der kugelförmigen Aufnahmevorrichtung (1) abrollt und die kugelförmige Aufnahmevorrichtung (1) zur Rotation antreibt, und/oder dass
b. jeweils wenigstens der mit der kugelförmigen Aufnahmevorrichtung (1) unmittelbar in Kontakt stehende Teil des Antriebsrades (7) in eine auf der Außenseite (2) der kugelförmigen Aufnahmevorrichtung (1) angeordnete Führungsnut (16), die entlang oder parallel zum Abrollweg verläuft, eingreift, und/oder dass
c. das Antriebsrad (7) eine umlaufende Führungsnut aufweist, in die eine auf der Außenseite (2) der kugelförmigen Aufnahmevorrichtung (1) angeordnete Leitschiene eingreift, die entlang dem Abrollweg oder parallel zum Abrollweg verläuft.

11. Rotationsvorrichtung nach einem der Ansprüche 7 bis 10, **dadurch gekennzeichnet, dass**
a. das Antriebsrad (7) Öffnungen aufweist, in die die Zähne einer entlang dem Abrollweg angeordneten Verzahnung der kugelförmigen Aufnahmevorrichtung (1) eingreifen, oder dass
b. das Antriebsrad (7) eine Verzahnung (9) aufweist, deren Zähne (10) in entlang dem Abrollweg verlaufende Öffnungen (8) in der Außenseite (2) der kugelförmigen Aufnahmevorrichtung (1) eingreifen.

12. Rotationsvorrichtung nach Anspruch 11, **dadurch gekennzeichnet, dass**
a. die Zähne (10) der Verzahnung (9) kegelförmig oder kegelstumpfförmig ausgebildet sind und/oder dass
b. die Außenabmessungen der Zähne (10) am Zahnfuß gleich den Innenabmessungen der Öffnungen (8) sind, und/oder dass
c. der Außendurchmesser der Zähne (10) am Zahnfuß dem Innendurchmesser der Öffnungen (8) entspricht, und/oder dass beim Abrollen des Antriebsrades (7) stets wenigstens zwei Zähne (10) der Verzahnung (9) in Eingriff sind.

13. Rotationsvorrichtung nach einem der Ansprüche 7 bis 12, **dadurch gekennzeichnet, dass** die kugelförmige Aufnahmevorrichtung (1) eine entlang dem Abrollweg verlaufende Verzahnung aufweist, die mit einer Gegenverzahnung des Antriebsrades (7) kämmt.

14. Rotationsvorrichtung nach einem der Ansprüche 7 bis 13, **dadurch gekennzeichnet, dass**
a. das Antriebsrad (7) als elektrisches Kontaktelement zum Übertragen von elektrischem Strom auf die kugelförmige Aufnahmevorrichtung (1) ausgebildet ist, und/oder dass
b. das Antriebsrad (7) wenigstens ein, insbesondere als Kontaktrolle (14, 15) ausgebildetes, Kontaktelement zum Übertragen von elektrischem Strom auf die kugelförmige Aufnahmevorrichtung (1) aufweist, und/oder dass
c. die kugelförmige Aufnahmevorrichtung (1) zwei entlang dem Abrollweg, insbesondere mittels der Führungsvorrichtung (3), voneinander elektrisch Isolierte Segmente (12, 13) aufweist und dass an dem Antriebsrad (7) zwei Kontaktelemente angeordnet sind, von denen einer mit einem der Segmente (12, 13) und der andere mit dem anderen der Segmente (12, 13) in elektrisch leitendem Kontakt steht, und/oder dass
d. die kugelförmige Aufnahmevorrichtung (1) zwei entlang dem Abrollweg, insbesondere mittels der Führungsvorrichtung (3), voneinander elektrisch Isolierte Segmente (12, 13) aufweist und dass an dem Antriebsrad (7) zwei Kontaktelemente angeordnet sind, wobei die Kontaktelemente als Kontaktrollen (14, 15) ausgebildet sind, die auf der Außenseite (2) der kugelförmigen Aufnahmevorrichtung (1) abrollen oder wobei die Kontaktelemente als Schleifkontakte ausgebildet sind, die an der Außenseite (2) der kugelförmigen Aufnahmevorrichtung (1) entlang schleifen.

15. Rotationsvorrichtung nach einem der Ansprüche 7 bis 14, **dadurch gekennzeichnet, dass** der Abrollweg wenigstens einen Teilabschnitt aufweist, der Teil eines Großkreises oder eines Kleinkreises ist, und/oder dass der Abrollweg mehrere Teilabschnitte aufweist, die Teile unterschiedlicher Groß- oder Kleinkreise sind.

## Claims

1. Spherical receiving device (1) for receiving at least one rotational mold, which is configured and intended to be driven to rotate in a rotational device by means of a drive wheel (7) rolling on the outer side (2) of the spherical receiving device (1), where the receiving device (1) has at least one guiding device (3) which causes a drive wheel (7) rolling on the outer side (2) of the spherical receiving device (1) to follow a predetermined rolling path on the outer side (2) of the spherical receiving device (1), **characterized in that** the rolling path, in addition to a curvature caused by the spherical shape of the receiving device (1), has a further curvature and/or **in that** the rolling path extends not exclusively along a large circle or a small circle of the receiving device (1) .

2. Spherical receiving device (1) according to Claim 1, **characterized in that**
a. the guiding device (3) has a guiding slot (16) arranged on the outer side (2) of the spherical receiving device (1), said guiding slot (16) extending along or parallel to the rolling path, and/or **in that**
b. the guiding device (3) has a guiding slot (16) arranged on the outer side (2) of the spherical receiving device (1), said guiding slot (16) extending along or parallel to the rolling path, where the guiding slot (16) is formed by two guide ribs (4) arranged on the outer side (2) of the spherical receiving device (1), and/or **in that**
c. the guiding device (3) has a guiding slot (16) arranged on the outer side (2) of the spherical receiving device (1) and which, in addition to a curvature caused by the spherical shape of the receiving device (1), has a further curvature, and/or **in that**
d. the guiding device (3) has a guiding slot (16) arranged on the outer side (2) of the spherical receiving device (1) and which extends not exclusively along a large circle or a small circle of the receiving device (1).

3. Spherical receiving device (1) according to one of Claims 1 to 2, **characterized in that**
a. the guiding device (3) has a guide rail arranged on the outer side (2) of the spherical receiving device (1), said guide rail extending along the rolling path or parallel to the rolling path, and/or **in that**
b. the guiding device (3) has a guide rail arranged on the outer side (2) of the spherical receiving device (1), said guide rail extending along the rolling path or parallel to the rolling path and which, in addition to a curvature caused by the spherical shape of the receiving device (1), has a further curvature, and/or **in that**
c. the guiding device (3) has a guide rail arranged on the outer side (2) of the spherical receiving device (1), said guide rail extending along the rolling path or parallel to the rolling path and which extends not exclusively along a large circle or a small circle of the receiving device (1).

4. Spherical receiving device (1) according to one of Claims 1 to 3, **characterized in that**
a. the guiding device (3) has openings (8), extending along the rolling path, in the outer side (2) of the spherical receiving device (1), said openings (8) being configured to cooperate with a toothing (9) on the drive wheel (7), and/or in that
b. the guiding device (3) has openings (8), extending along the rolling path, in the outer side (2) of the spherical receiving device (1), said openings (8) being configured to cooperate with a toothing (9) on the drive wheel (7), said openings (8), in addition to a curvature caused by the spherical shape of the receiving device (1), extending along a further curvature, and/or **in that**
c. the guiding device (3) has openings (8), extending along the rolling path, in the outer side (2) of the spherical receiving device (1), said openings (8) being configured to cooperate with a toothing (9) on the drive wheel (7), said openings (8) extending not exclusively along a large circle or a small circle of the receiving device (1).

5. Spherical receiving device (1) according to one of Claims 1 to 4, **characterized in that**
a. the guiding device (3) has, on the outer side (2), a toothing extending along the rolling path, said toothing being configured to cooperate with a counterpart toothing on the drive wheel (7), and/or **in that**
b. the guiding device (3) has, on the outer side (2), a toothing extending along the rolling path, said toothing being configured to cooperate with a counterpart toothing on the drive wheel (7), and said toothing, in addition to a curvature caused by the spherical shape of the receiving device (1), extending along a further curvature, and/or in that
c. the guiding device (3) has, on the outer side (2), a toothing extending along the rolling path, said toothing being configured to cooperate with a counterpart toothing on the drive wheel (7), and said toothing extending not exclusively along a large circle or a small circle of the receiving device (1).

6. Spherical receiving device (1) according to one of Claims 1 to 5, **characterized in that**
a. the spherical receiving device (1) has two electrically conductive segments (12, 13) which are electrically insulated from one another along the rolling path, in particular by means of the guiding device (3), and/or **in that**
b. the spherical receiving device (1) is assembled from several hollow sphere sections which, in particular already before assembly, have different portions of the guiding device (3).

7. Rotational device which has a spherical receiving device (1) according to one of Claims 1 to 6 and a drive wheel (7) which is driven by means of a drive motor (5), said drive wheel (7) rolling on the outer side (2) of the spherical receiving device (1) and driving the spherical receiving device (1) to rotate.

8. Rotational device according to Claim 7, **characterized in that**
a. the drive wheel (7) has a counterpart guiding device or is configured as a counterpart guiding device which cooperates with the guiding device (3) of the spherical receiving device (1), and/or in that
b. the drive wheel (7) is mounted so as to be rotatable about an axis of rotation that is oriented in particular tangentially relative to the spherical receiving device (1), and/or **in that**
c. the drive wheel (7) is mounted so as to be rotatable about an axis of rotation that is oriented in particular tangentially relative to the spherical receiving device (1), and **in that** the drive wheel (7) or the drive wheel (7) together with the drive motor (5) is mounted so as to be, in particular freely, rotatable additionally about a further axis of rotation (17), which is in particular oriented radially relative to the spherical receiving device (1).

9. Rotational device according to Claims 7 or 8, **characterized in that** a sensor is provided which measures the rotary position and/or a number of revolutions of the drive wheel (7) or of a driveshaft (6) of the drive motor (5) or of a rotation transmission component interconnected in terms of drive.

10. Rotational device according to one of Claims 7 to 9, **characterized in that**
a. only one drive wheel (7) is provided, which rolls on the outer side (2) of the spherical receiving device (1) and drives the spherical receiving device (1) to rotate, and/or **in that**
b. in each case at least that part of the drive wheel (7) that is in direct contact with the spherical receiving device (1) engages in a guiding slot (16) arranged on the outer side (2) of the spherical receiving device (1), said guiding slot (16) extending along or parallel to the rolling path, and/or **in that**
c. the drive wheel (7) has an encircling guiding slot in which a guide rail arranged on the outer side (2) of the spherical receiving device (1) engages, said guide rail extending along the rolling path or parallel to the rolling path.

11. Rotational device according to one of Claims 7 to 10, **characterized in that**
a. the drive wheel (7) has openings in which the teeth of a toothing, arranged along the rolling path, of the spherical receiving device (1) engage, and/or **in that**
b. the drive wheel (7) has a toothing (9), the teeth (10) of which engage in openings (8), extending along the rolling path, in the outer side (2) of the spherical receiving device (1).

12. Rotational device according to Claim 11, **characterized in that**
a. the teeth (10) of the toothing (9) are configured in a conical or frustoconical manner, and/or **in that**
b. the external dimensions of the teeth (10) at the tooth root are identical to the internal dimensions of the openings (8), and/or **in that**
c. the outside diameter of the teeth (10) at the tooth root corresponds to the inside diameter of the openings (8), and/or **in that** at least two teeth (10) of the toothing (9) are always in engagement while the drive wheel (7) rolls.

13. Rotational device according to one of Claims 7 to 12, **characterized in that** the spherical receiving device (1) has a toothing extending along the rolling path, said toothing meshing with a counterpart toothing of the drive wheel (7).

14. Rotational device according to one of Claims 7 to 13, **characterized in that**
a. the drive wheel (7) is configured as an electrical contact element for transmitting electric current to the spherical receiving device (1), and/or **in that**
b. the drive wheel (7) has at least one contact element, configured in particular as a contact roller (14, 15), for transmitting electric current to the spherical receiving device (1), and/or **in that**
c. the spherical receiving device (1) has two segments (12, 13) that are electrically insulated from one another, in particular by means of the guiding device (3), along the rolling path, and **in that** two contact elements are arranged on the drive wheel (7), of which one is in electrically conducting contact with one of the segments (12, 13) and the other is in electrically conducting contact with the other of the segments (12, 13), and/or **in that**
d. the spherical receiving device (1) has two segments (12, 13) that are electrically insulated from one another, in particular by means of the guiding device (3), along the rolling path, and **in that** two contact elements are arranged on the drive wheel (7), where the contact elements are configured as contact rollers (14, 15) which roll on the outer side (2) of the spherical receiving device (1) or where the contact elements are configured as sliding contacts which slide along the outer side (2) of the spherical receiving device (1).

15. Rotational device according to one of Claims 7 to 14, **characterized in that** the rolling path has at least one partial section which is part of a large circle or of a small circle, and/or **in that** the rolling path has multiple partial sections which are parts of different large or small circles.

## Revendications

1. Dispositif de réception sphérique (1) pour recevoir au moins un moule de rotomoulage qui est réalisé et prévu pour être entraîné en rotation dans un dispositif de rotation au moyen d'une roue d'entraînement (7) roulant sur le côté extérieur (2) du dispositif de réception sphérique (1), le dispositif de réception (1) présentant au moins un dispositif de guidage (3) qui fait en sorte qu'une roue d'entraînement (7) roulant sur le côté extérieur (2) du dispositif de réception sphérique (1) suive une trajectoire de roulement prédéterminée sur le côté extérieur (2) du dispositif de réception sphérique (1), **caractérisé en ce que** la trajectoire de roulement présente une courbure supplémentaire, en plus d'une courbure qui est prédéfinie par la forme sphérique du dispositif de réception (1) et/ou **en ce que** la trajectoire de roulement ne s'étend pas exclusivement le long d'un grand cercle ou d'un petit cercle du dispositif de réception (1).

2. Dispositif de réception sphérique (1) selon la revendication 1, **caractérisé en ce que**
a. le dispositif de guidage (3) présente une rainure de guidage (16) disposée sur le côté extérieur (2) du dispositif de réception sphérique (1), qui s'étend le long de, ou parallèlement à, la trajectoire de roulement et/ou **en ce que**
b. le dispositif de guidage (3) présente une rainure de guidage (16) disposée sur le côté extérieur (2) du dispositif de réception sphérique (1), qui s'étend le long de, ou parallèlement à, la trajectoire de roulement, la rainure de guidage (16) étant formée par deux glissières de guidage (4) disposées sur le côté extérieur (2) du dispositif de réception sphérique (1), et/ou **en ce que**
c. le dispositif de guidage (3) présente une rainure de guidage (16) disposée sur le côté extérieur (2) du dispositif de réception sphérique (1), qui présente une courbure supplémentaire, en plus d'une courbure qui est prédéfinie par la forme sphérique du dispositif de réception (1) et/ou **en ce que**
d. le dispositif de guidage (3) présente une rainure de guidage (16) disposée sur le côté extérieur (2) du dispositif de réception sphérique (1), qui ne s'étend pas exclusivement le long d'un grand cercle ou d'un petit cercle du dispositif de réception (1).

3. Dispositif de réception sphérique (1) selon l'une quelconque des revendications 1 et 2, **caractérisé en ce que**
a. le dispositif de guidage (3) présente un rail de guidage disposé sur le côté extérieur (2) du dispositif de réception sphérique (1), qui s'étend le long de la trajectoire de roulement ou parallèlement à la trajectoire de roulement et/ou **en ce que**
b. le dispositif de guidage (3) présente un rail de guidage disposé sur le côté extérieur (2) du dispositif de réception sphérique (1), qui s'étend le long de la trajectoire de roulement ou parallèlement à la trajectoire de roulement et qui présente une courbure supplémentaire, en plus d'une courbure qui est prédéfinie par la forme sphérique du dispositif de réception (1) et/ou **en ce que**
c. le dispositif de guidage (3) présente un rail de guidage disposé sur le côté extérieur (2) du dispositif de réception sphérique (1), qui s'étend le long de la trajectoire de roulement ou parallèlement à la trajectoire de roulement et qui ne s'étend pas exclusivement le long d'un grand cercle ou d'un petit cercle du dispositif de réception (1).

4. Dispositif de réception sphérique (1) selon l'une quelconque des revendications 1 à 3, **caractérisé en ce que**
a. le dispositif de guidage (3) présente des ouvertures (8) s'étendant le long de la trajectoire de roulement dans le côté extérieur (2) du dispositif de réception sphérique (1), lesquelles sont réalisées de manière à coopérer avec une denture (9) de la roue d'entraînement (7), et/ou **en ce que**
b. le dispositif de guidage (3) présente des ouvertures (8) s'étendant le long de la trajectoire de roulement dans le côté extérieur (2) du dispositif de réception sphérique (1), lesquelles sont réalisées de manière à coopérer avec une denture (9) de la roue d'entraînement (7), les ouvertures (8) s'étendant le long d'une courbure supplémentaire en plus d'une courbure qui est prédéfinie par la forme sphérique du dispositif de réception (1), et/ou en ce que
c. le dispositif de guidage (3) présente des ouvertures (8) s'étendant le long de la trajectoire de roulement dans le côté extérieur (2) du dispositif de réception sphérique (1), lesquelles sont réalisées de manière à coopérer avec une denture (9) de la roue d'entraînement (7), les ouvertures (8) ne s'étendant pas exclusivement le long d'un grand cercle ou d'un petit cercle du dispositif de réception (1).

5. Dispositif de réception sphérique (1) selon l'une quelconque des revendications 1 à 4, **caractérisé en ce que**
a. le dispositif de guidage (3) présente une denture s'étendant le long de la trajectoire de roulement sur le côté extérieur (2), laquelle est réalisée de manière à coopérer avec une denture conjuguée de la roue d'entraînement (7), et/ou **en ce que**
b. le dispositif de guidage (3) présente une denture s'étendant le long de la trajectoire de roulement sur le côté extérieur (2), laquelle est réalisée de manière à coopérer avec une denture conjuguée de la roue d'entraînement (7), et qui s'étend le long d'une courbure supplémentaire en plus d'une courbure qui est prédéfinie par la forme sphérique du dispositif de réception (1), et/ou **en ce que**
c. le dispositif de guidage (3) présente une denture s'étendant le long de la trajectoire de roulement sur le côté extérieur (2), laquelle est réalisée de manière à coopérer avec une denture conjuguée de la roue d'entraînement (7), et qui ne s'étend pas exclusivement le long d'un grand cercle ou d'un petit cercle du dispositif de réception (1).

6. Dispositif de réception sphérique (1) selon l'une quelconque des revendications 1 à 5, **caractérisé en ce que**
a. le dispositif de réception sphérique (1) présente deux segments électriquement conducteurs (12, 13) qui sont électriquement isolés l'un de l'autre le long de la trajectoire de roulement, notamment au moyen du dispositif de guidage (3), ou **en ce que**
b. le dispositif de réception sphérique (1) est constitué de plusieurs pièces sphériques creuses qui, notamment déjà avant l'assemblage, présentent différentes portions du dispositif de guidage (3).

7. Dispositif de rotation qui présente un dispositif de réception sphérique (1) selon l'une quelconque des revendications 1 à 6 et une roue d'entraînement (7) entraînée au moyen d'un moteur d'entraînement (5), qui roule sur le côté extérieur (2) du dispositif de réception sphérique (1) et qui entraîne en rotation le dispositif de réception sphérique (1).

8. Dispositif de rotation selon la revendication 7, **caractérisé en ce que**
a. la roue d'entraînement (7) présente un dispositif de guidage conjugué ou est réalisée sous forme de dispositif de guidage conjugué qui coopère avec le dispositif de guidage (3) du dispositif de réception sphérique (1), et/ou en ce que
b. la roue d'entraînement (7) est supportée de manière à pouvoir tourner autour d'un axe de rotation orienté notamment tangentiellement par rapport au dispositif de réception sphérique (1), et/ou **en ce que**
c. la roue d'entraînement (7) est supportée de manière à pouvoir tourner autour d'un axe de rotation orienté notamment tangentiellement par rapport au dispositif de réception sphérique (1) et **en ce que** la roue d'entraînement (7) ou la roue d'entraînement (7) conjointement avec le moteur d'entraînement (5), est en outre supportée de manière à pouvoir tourner, en particulier librement, autour d'un axe de rotation supplémentaire (17) notamment orienté radialement par rapport au dispositif de réception sphérique (1).

9. Dispositif de rotation selon la revendication 7 ou 8, **caractérisé en ce qu'**il est prévu un capteur qui mesure la position de rotation et/ou un nombre de tours de la roue d'entraînement (7) ou d'un arbre d'entraînement (6) du moteur d'entraînement (5) ou d'un composant de transfert de rotation interposé par une technique d'entraînement.

10. Dispositif de rotation selon l'une quelconque des revendications 7 à 9, **caractérisé en ce que**
a. il est prévu exclusivement une roue d'entraînement unique (7) qui roule sur le côté extérieur (2) du dispositif de réception sphérique (1) et qui entraîne en rotation le dispositif de réception sphérique (1), et/ou **en ce que**
b. à chaque fois au moins la partie de la roue d'entraînement (7) directement en contact avec le dispositif de réception sphérique (1) vient en prise dans une rainure de guidage (16) disposée sur le côté extérieur (2) du dispositif de réception sphérique (1), qui s'étend le long de, ou parallèlement à, la trajectoire de roulement, et/ou **en ce que**
c. la roue d'entraînement (7) présente une rainure de guidage périphérique dans laquelle s'engage un rail de guidage disposé sur le côté extérieur (2) du dispositif de réception sphérique (1), lequel s'étend le long de la trajectoire de roulement ou parallèlement à la trajectoire de roulement.

11. Dispositif de rotation selon l'une quelconque des revendications 7 à 10, **caractérisé en ce que**
a. la roue d'entraînement (7) présente des ouvertures dans lesquelles s'engagent les dents d'une denture du dispositif de réception sphérique (1) disposée le long de la trajectoire de roulement, ou **en ce que**
b. la roue d'entraînement (7) présente une denture (9) dont les dents (10) s'engagent dans des ouvertures (8) s'étendant le long de la trajectoire de roulement dans le côté extérieur (2) du dispositif de réception sphérique (1).

12. Dispositif de rotation selon la revendication 11, **caractérisé en ce que**
a. les dents (10) de la denture (9) sont réalisées sous forme conique ou sous forme tronconique et/ou **en ce que**
b. les dimensions extérieures des dents (10) à la base des dents sont identiques aux dimensions intérieures des ouvertures (8), et/ou **en ce que**
c. le diamètre extérieur des dents (10) à la base des dents correspond au diamètre intérieur des ouvertures (8), et/ou **en ce que** lors du roulement de la roue d'entraînement (7), toujours au moins deux dents (10) de la denture (9) sont en prise.

13. Dispositif de rotation selon l'une quelconque des revendications 7 à 12, **caractérisé en ce que** le dispositif de réception sphérique (1) présente une denture s'étendant le long de la trajectoire de roulement, laquelle s'engrène avec une denture conjuguée de la roue d'entraînement (7).

14. Dispositif de rotation selon l'une quelconque des revendications 7 à 13, **caractérisé en ce que**
a. la roue d'entraînement (7) est réalisée sous forme d'élément de contact électrique pour le transfert de courant électrique au dispositif de réception sphérique (1), et/ou **en ce que**
b. la roue d'entraînement (7) présente au moins un élément de contact réalisé notamment sous forme de rouleau de contact (14, 15) pour le transfert de courant électrique au dispositif de réception sphérique (1), et/ou **en ce que**
c. le dispositif de réception sphérique (1) présente deux segments électriquement isolés l'un de l'autre (12, 13) le long de la trajectoire de roulement, notamment au moyen du dispositif de guidage (3) et **en ce que** deux éléments de contact sont disposés au niveau de la roue d'entraînement (7), dont l'un est en contact électriquement conducteur avec l'un des segments (12, 13) et l'autre est en contact électriquement conducteur avec l'autre des segments (12, 13), et/ou **en ce que**
d. le dispositif de réception sphérique (1) présente deux segments électriquement isolés l'un de l'autre (12, 13) le long de la trajectoire de roulement, notamment au moyen du dispositif de guidage (3), et **en ce que** deux éléments de contact sont disposés au niveau de la roue d'entraînement (7), les éléments de contact étant réalisés sous forme de rouleaux de contact (14, 15) qui roulent sur le côté extérieur (2) du dispositif de réception sphérique (1) ou les éléments de contact étant réalisés sous forme de contacts glissants qui glissent le long du côté extérieur (2) du dispositif de réception sphérique (1).

15. Dispositif de rotation selon l'une quelconque des revendications 7 à 14, **caractérisé en ce que** la trajectoire de roulement présente au moins une portion partielle qui fait partie d'un grand cercle ou d'un petit cercle, et/ou **en ce que** la trajectoire de roulement présente plusieurs portions partielles qui font partie de grands ou de petits cercles différents.
